# EUROPEAN PATENT APPLICATION

(11) **EP 4 589 940 A1**
(43) Date of publication of application: **23.07.2025**
(21) Application number: 25152310.6
(22) Date of filing: 16.01.2025
(51) Int. Cl.: H04N 5/262, H04N 23/63

(54) **DIGITAL CAMERA**

(30) Priority: 18.01.2024 JP 2024005875
(71) Applicant: FUJIFILM Corporation, Tokyo Tokyo 106-8620 (JP)
(72) Inventor: UENO, Hayato, Saitama (JP)
(74) Representative: Dehns Germany Partnerschaft mbB

(57) **Abstract**

**DIGITAL CAMERA**

Provided is a digital camera (10) that, in a case where a plurality of images are treated as one set, enables a user to easily recognize a position where a captured image is disposed in the one set of the images and to consider composition on the basis of the position where the image is disposed.

A digital camera (10) includes an imaging element (21) that images an object, a card I/F (41) and a memory card (42) that record an image acquired by the imaging element (21), a display (22) that displays a preview image which has not yet been recorded in the memory card (42), and a controller (31). The controller (31) displays the preview image on the display (22) and notifies a user of information related to a disposition position (65) of the preview image (61, 62) in a case where the preview image (61, 62) is treated as one of a plurality of images that are recorded and included in one set.

## Description

### BACKGROUND OF THE INVENTION

### 1. Field of the Invention

The present invention relates to a digital camera that imitates a half-size camera which records a plurality of photographs in one frame of a photographic film.

### 2. Description of the Related Art

JP2002-244194A discloses a camera that uses a photographic film and can be switched between a normal imaging mode and a half-screen capture mode by a lever operation. In this camera, in a case where the half-screen capture mode is selected and imaging is performed, a position of a left half of one frame (a screen size in a case of normal imaging) of the photographic film is exposed by the movement of a light shielding plate and feeding by a film feed motor. As a result, a first half screen is formed. In a case where imaging is performed after the first half screen is formed in the half-screen capture mode, the photographic film is fed, and a position of a right half of the one frame is exposed. As a result, a second half screen is formed.

In the camera disclosed in JP2002-244194A, in a case where the half-screen capture mode is set, a half-screen capture mode symbol indicating the half-screen capture mode is displayed in addition to the number of captured frames. In this camera, in a case where the half-screen capture mode is set and only the first half screen is captured, the left half of the half-screen capture mode symbol is displayed in black.

### SUMMARY OF THE INVENTION

However, in the camera disclosed in JP2002-244194A, it is displayed that the half-screen capture mode is set and the first half screen in one frame is exposed. However, the position where the image is formed in the one frame and the position to be exposed next are not displayed. Therefore, the technique disclosed in JP2002-244194A is not intended to determine the position where the image to be captured next is disposed.

In addition, the user may consider the composition of the image in a state in which the image acquired by the imaging element is displayed on an image display unit such as a display. However, the technique disclosed in JP2002-244194A is a technique of a film camera and does not enable the user to check the composition and disposition position of the image at the same time and to consider the composition of the image on the basis of the position where the image is disposed in one frame.

Further, in the digital camera, it is possible to record three or more images in one frame. However, in the camera disclosed in JP2002-244194A, it is not considered that three or more positions are exposed in one frame of the photographic film.

The present invention has been made in order to solve the above-described problems, and an object of the present invention is to provide a digital camera that enables a user to easily recognize a position where a captured image is disposed in one set of images in a case where a plurality of images are treated as the one set and to consider composition on the basis of the position where the image is disposed.

In order to solve the above-described problems, according to an aspect of the present invention, there is provided a digital camera comprising an imaging element, an image recording unit, an image display unit, and a processor. A plurality of images recorded in the image recording unit are treated as one set. The processor is configured to: display a preview image on the image display unit; and notify a user of information related to a disposition position of the preview image in the one set of the images in a case where the preview image is treated as one of the plurality of images that are recorded in the image recording unit and are included in the one set. The imaging element images an object. The image recording unit records an image acquired by the imaging element. The image display unit displays the preview image which has been acquired by the imaging element and has not yet been recorded in the image recording unit.

Preferably, the processor is configured to dispose and record the plurality of images in a recording medium in a case where the plurality of images included in the one set are acquired.

Preferably, the digital camera further comprises a camera body, and the image display unit is a display that is provided on a rear surface of the camera body.

Preferably, the digital camera further comprises a camera body, and the image display unit is an electronic view finder that is provided in the camera body.

Preferably, the processor is configured to display the disposition position on the image display unit.

Preferably, the processor is configured to display, as the disposition position, information indicating an order in which the image is captured among the plurality of images included in the one set.

Preferably, the processor is configured to display the captured image on the image display unit and to display the disposition position on the image display unit.

Preferably, the processor is configured to: delete the image recorded in the image recording unit; in a case where the image has been deleted, calculate the disposition position according to the number of images that have not been deleted from the image recording unit and have been recorded in the image recording unit; and change a disposition of the images treated as the one set according to the calculated disposition position.

Preferably, the processor is configured to: transmit the plurality of images treated as the one set to an external display device; and transmit all of the plurality of images treated as the one set as one data item in a case where the plurality of images are transmitted to the external display device.

Preferably, the digital camera has a video capture function, and the processor is configured to record, in the image recording unit, a video captured by the video capture function as one of the plurality of images included in the one set.

Preferably, the processor is configured to switch the disposition position between a display state and a non-display state.

Preferably, the processor is configured to change the number of the plurality of images treated as the one set.

Preferably, the processor is configured to change at least one of a size or an aspect ratio of the images treated as the one set.

Preferably, the processor is configured to change a ratio of display regions for each of the plurality of images treated as the one set.

Preferably, the processor is configured to, in a case where the images are captured and at least one of the images is acquired as one of the images included in the one set, include a newly acquired image in another set without including the new image in the one set.

Preferably, the digital camera further comprises: a camera body; and a posture detection sensor that detects a posture of the camera body. Preferably, in a case where the plurality of images treated as the one set are displayed, the images are displayed according to the posture of the camera body detected in a case where the plurality of images have been captured, and information related to the disposition position where the plurality of images are disposed is attached according to an order in which the plurality of images have been captured.

According to the present invention, in a case where a plurality of images are treated as one set, it is possible to easily recognize the position where a captured image is disposed in the one set of the images and to consider composition on the basis of the position where the image is disposed.

### BRIEF DESCRIPTION OF THE DRAWINGS

Fig. 1 is a front perspective view showing a digital camera.
Fig. 2 is a rear perspective view showing the digital camera.
Fig. 3 is a block diagram showing a schematic configuration of the digital camera.
Fig. 4 is a block diagram illustrating a configuration of a controller.
Fig. 5 is a diagram showing a case where an image is recorded in a half-size mode.
Fig. 6 is a rear view showing the digital camera in which a preview image and a disposition position are displayed on a display.
Fig. 7 is a diagram showing the display of the preview image and the disposition position (A), acquisition of a recorded image (B), and disposition and recording of the recorded image (C).
Fig. 8 is a flowchart showing an operation of the digital camera.
Fig. 9 is a rear view showing a digital camera according to a first modification example.
Fig. 10 is a rear view showing a digital camera according to a second modification example.
Fig. 11 is a rear view showing a digital camera according to a third modification example.
Fig. 12 is a rear view showing a digital camera according to a fourth modification example.
Fig. 13 is a rear view showing a digital camera according to a fifth modification example.
Fig. 14 is a diagram illustrating a process before an image is deleted (A) and a process after the image is deleted (B) in a sixth modification example.
Fig. 15 is a block diagram showing a schematic configuration of a digital camera according to a seventh modification example.
Fig. 16 is a diagram showing a case where a video is recorded in an eighth modification example.
Fig. 17 is a diagram showing a case where the disposition position is switched between display (A) and non-display (B) in a ninth modification example.
Fig. 18 is a diagram showing switching between a case where two recorded images are disposed (A) and a case where one recorded image is disposed (B) in a tenth modification example.
Fig. 19 is a diagram showing a state before a size and an aspect ratio of an image are changed (A), a state after the aspect ratio is changed (B), and a stage after the aspect ratio and the size are changed (C) in an eleventh modification example.
Fig. 20 is a diagram showing a case where a ratio of display regions of recorded images is changed from a state in which the ratio is 50:50 (A) to a state in which the ratio is 60:40 (B) in a twelfth modification example.
Fig. 21 is a diagram showing a state before the disposition of the recorded image (A) is skipped and a state after the disposition of the recorded image is skipped (B) in a thirteenth modification example.
Fig. 22 is a block diagram showing a schematic configuration of a digital camera according to a fourteenth modification example.
Fig. 23 is a diagram showing the recorded images acquired in a case where the digital camera is in a vertical shooting state and a grip is positioned upward (A) and a case where the digital camera is in the vertical shooting state and the grip is positioned downward (B) in the fourteenth modification example.
Fig. 24 is a diagram showing a case where an image captured by a digital camera according to a second embodiment is recorded.
Fig. 25 is a rear view showing the digital camera according to the second embodiment.
Fig. 26 is a diagram showing a case where an image captured by a digital camera according to a third embodiment is recorded.
Fig. 27 is a rear view showing the digital camera according to the third embodiment.

### DESCRIPTION OF THE PREFERRED EMBODIMENTS

### First Embodiment

### Outline of Camera

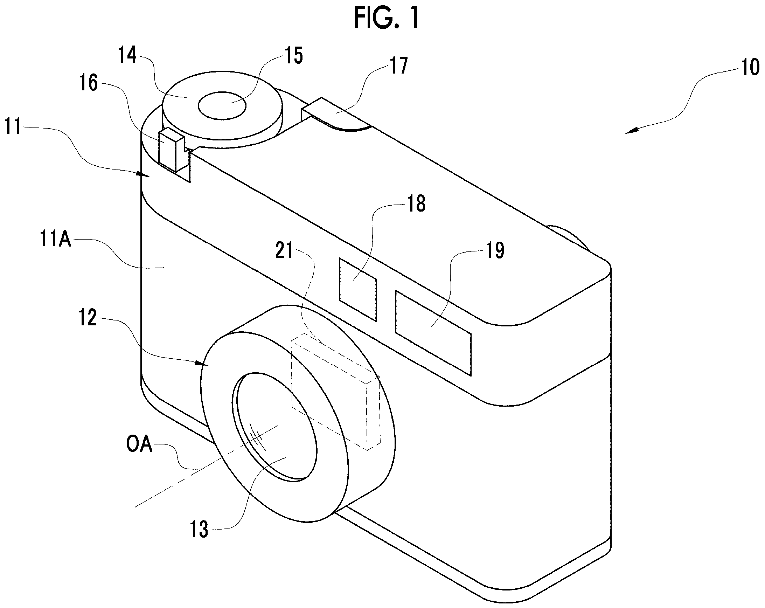

As shown in Fig. 1, a digital camera 10 comprises a camera body 11 and a lens barrel 12. The camera body 11 has a horizontally long box shape in which a dimension in a left-right direction is larger than a dimension in an up-down direction in a front view.

A grip 11A is provided in a left end portion of the camera body 11 in a front view. The grip 11A has a semi-cylindrical shape that connects a front surface and a rear surface of the camera body 11 and has a shape that is easy for a user to grip. The lens barrel 12 is disposed on the front surface of the camera body 11 and is provided with an imaging optical system 13. The imaging optical system 13 forms an image of object light on an imaging element 21.

A mode dial 14, a release switch 15, a power switch 16, a lever 17, and the like are provided on an upper surface of the camera body 11. The digital camera 10 comprises a full-size mode, a half-size mode, a still image capture mode, a video capture mode, and the like, and these modes can be switched by, for example, the mode dial 14.

In addition to the lens barrel 12, a flash device 18 and an illumination device 19 are provided on the front surface of the camera body 11. In the still image capture mode of the digital camera 10, the flash device 18 irradiates an object with illumination light forcibly or in a case where an exposure value of the object is less than a predetermined value in operative association with the release of a shutter. On the other hand, the illumination device 19 constantly irradiates the object with the illumination light in a case where the digital camera 10 is in the video capture mode.

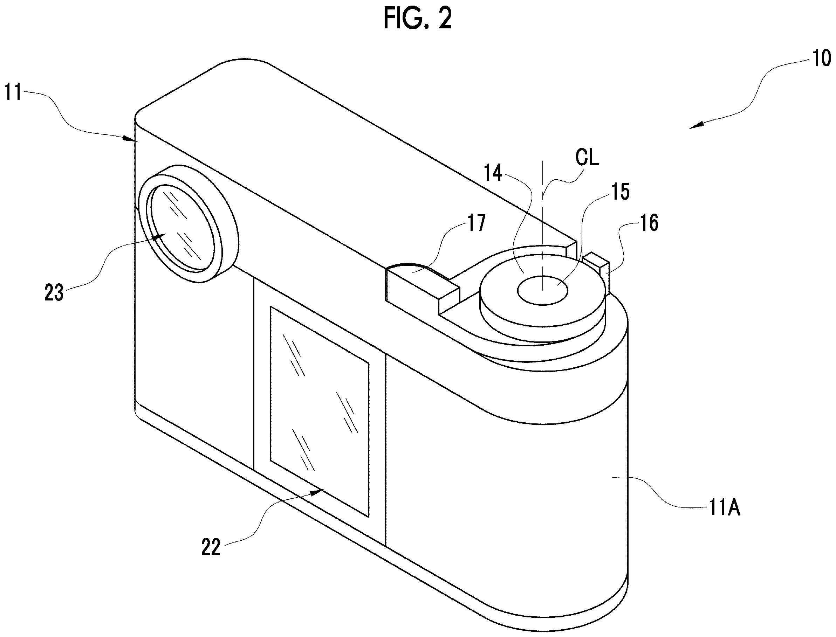

As shown in Fig. 2, the lever 17 is provided above the grip 11A. The lever 17 is provided to form a laminated structure together with the mode dial 14 and the release switch 15. The lever 17 is attached to be rotatable about a central axis CL of the mode dial 14.

The lever 17 is used for an image feed operation in a case where a recorded image is displayed on a display 22. For example, the user can repeatedly perform an operation of rotating the lever 17 counterclockwise about the central axis CL to sequentially change the recorded image displayed on the display 22 from the latest recorded image to the past recorded image in reverse chronological order. Alternatively, the user can repeatedly perform an operation of rotating the lever 17 clockwise about the central axis CL to sequentially change the recorded image displayed on the display 22 from the recorded image captured in the past to a newer recorded image in chronological order.

The power switch 16 is a push-type switch and is disposed in the vicinity of the mode dial 14 and the lever 17. A power-on state and a power-off state of the digital camera 10 are alternately switched in response to the pressing of the power switch 16.

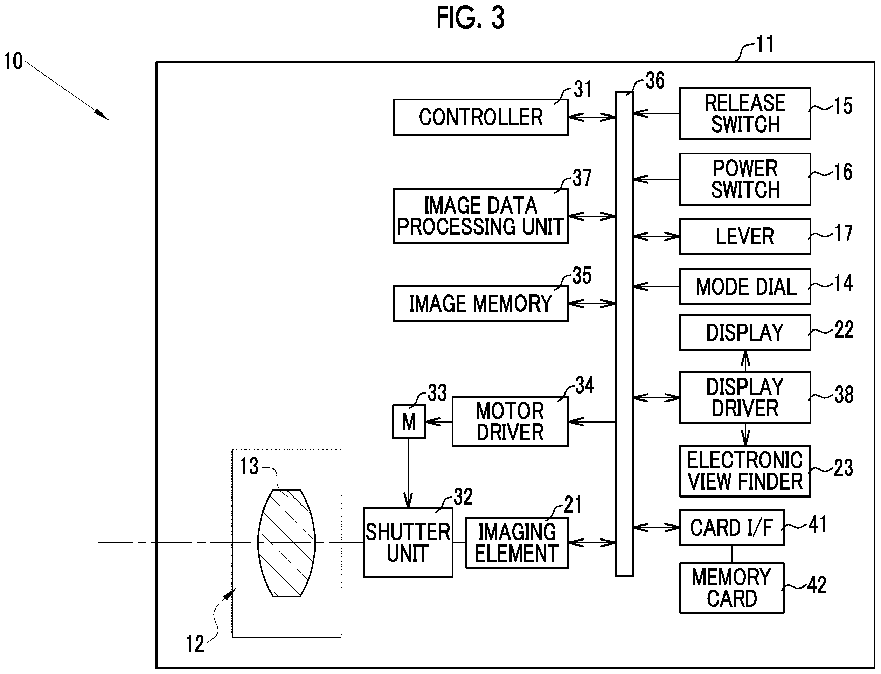

The imaging element 21 (see Fig. 3) is provided in the camera body 11. The imaging element 21 is held by a holder (not shown) and is fixed to an image plane side of the lens barrel 12. The imaging element 21 has a still image and video capture function and is, for example, a complementary metal oxide semiconductor (CMOS) image sensor, a charge coupled device (CCD) image sensor, or an organic thin film imaging element. The imaging element 21 is an imaging element in which a length in the vertical direction is smaller than a length in the horizontal direction in a case where the imaging element is horizontally placed, that is, the upper surface of the camera body 11 faces upward in the vertical direction. In addition, the imaging element 21 is not limited thereto and may be an imaging element in which the length in the vertical direction is larger than the length in the horizontal direction in a case where the imaging element is vertically placed, that is, the upper surface of the camera body 11 faces upward in the vertical direction.

The display 22 and an electronic view finder 23 are provided on the rear surface of the camera body 11. The display 22 is a liquid crystal display (LCD), an organic electroluminescent display (OELD), or the like. The display 22 is used for live view display, recorded image display, setting menu display, and the like. In the live view display, the recorded image obtained by imaging the object with the imaging element 21 is displayed on the display 22 in real time.

The electronic view finder 23 is provided in an upper portion of the camera body 11. A live view is displayed on the electronic view finder 23, and the recorded image obtained by imaging the object with the imaging element 21 is displayed on the electronic view finder 23 in real time. The electronic view finder 23 can be turned on and off to switch display on the display 22 as necessary. Hereinafter, a case where a preview image and a recorded image are displayed on the display 22 will be mainly described.

### Electrical Configuration of Camera

As shown in Fig. 3, a controller 31 consists of a microcomputer comprising a CPU, a read only memory (ROM) that stores programs and parameters used by the CPU, a random access memory (RAM) that is used as a work memory of the CPU (all not shown), and the like and controls each unit of the digital camera 10.

In a case where the lever 17 is rotated, a signal for detecting the amount of rotation is transmitted to the controller 31. In addition, a mode switching signal from the mode dial 14, a release signal from the release switch 15, and a power on or off signal from the power switch 16 are input to the controller 31.

A shutter unit 32 is, for example, a focal plane shutter and is disposed between the imaging optical system 13 and the imaging element 21. The shutter unit 32 is provided to block an optical path between the imaging optical system 13 and the imaging element 21 and is changed between an open state and a closed state. The shutter unit 32 is changed to the open state in a case where a live view image and a video are captured. The shutter unit 32 is changed from the open state to the closed state in a case where a still image is captured. In addition, in a case where a preview image is captured in the video capture mode, the shutter unit 32 operates in the same manner as in a case where the video is captured. In a case where a preview image is captured in the still image capture mode, the shutter unit 32 operates in the same manner as in a case where a still image is captured. The shutter unit 32 is driven by a shutter motor 33. A motor driver 34 controls the driving of the shutter motor 33.

The driving of the imaging element 21 is controlled by the controller 31. The imaging element 21 has a light-receiving surface composed of a plurality of pixels (not shown) that are arranged in a two-dimensional matrix. Each pixel includes a photoelectric conversion element and performs photoelectric conversion on an object image formed on the light-receiving surface by the imaging optical system 13 to generate an imaging signal.

Further, the imaging element 21 comprises signal processing circuits such as a noise removal circuit, an auto gain controller, and an A/D conversion circuit (all not shown). The noise removal circuit performs a noise removal process on the imaging signal. The auto gain controller amplifies a level of the imaging signal to an optimum value. The A/D conversion circuit converts the imaging signal into a digital signal and outputs the digital signal from the imaging element 21 to a bus line 36. The output signal of the imaging element 21 is image data (so-called RAW data) having one color signal for each pixel.

An image memory 35 stores image data corresponding to one frame output to the bus line 36. An image data processing unit 37 reads out the image data corresponding to one frame from the image memory 35 and performs known image processing such as matrix calculation, a demosaicing process, a γ correction process, brightness and color difference conversion, and a resizing process.

In a case where the full-size mode is selected, the digital camera 10 generates an imaging signal using the entire effective imaging region of the imaging element 21. On the other hand, in a case where the half-size mode is selected, the digital camera 10 generates an imaging signal using half of the effective imaging region of the imaging element 21. This makes it possible to obtain a recorded image having a size that is half of the size of the recorded image obtained in the full-size mode in the half-size mode. In addition, the present invention is not limited thereto. In a case where a plurality of recorded images are disposed in one frame and recorded, the recorded images whose size has been reduced according to the number of recorded images disposed in one frame may be obtained. Further, the process of recording the recorded image in the half-size mode will be described below.

A display driver 38 sequentially inputs the image data corresponding to one frame (a full size or a half size) subj ected to the image processing by the image data processing unit 37 to the display 22 or the electronic view finder 23. For example, the display 22 sequentially displays the live view image with a predetermined period. In addition, a case where the recorded image is displayed on the display 22 will be described below.

A card interface (I/F) 41 is incorporated in a card slot (not shown) provided in the camera body 11 and is electrically connected to a memory card 42 inserted in the card slot. The card I/F 41 and the memory card 42 correspond to an image recording unit in the claims and record the image acquired by the imaging element 21. Specifically, the card I/F 41 stores the image data subjected to the image processing by the image data processing unit 37 in the memory card 42. Further, in a case where the image data stored in the memory card 42 is reproduced and displayed, the card I/F 41 reads out the image data from the memory card 42. Furthermore, the image recording unit is not limited to the configuration in which the image data is recorded in a recording medium, such as a memory card, and may be a recording device such as a solid state drive (SSD).

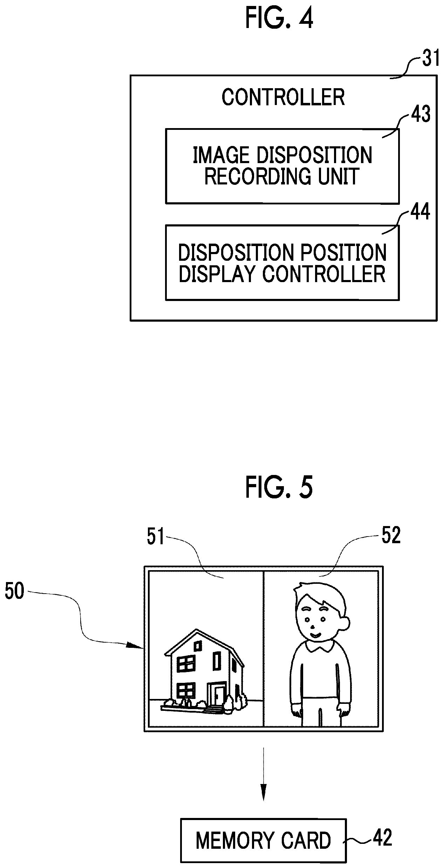

As shown in Fig. 4, the controller 31 is a processor and executes a program in a program memory (not shown) to implement functions of an image disposition recording unit 43 and a disposition position display controller 44. The image disposition recording unit 43 treats a plurality of images recorded in the image recording unit as one set. Specifically, in a case where the imaging element 21 acquires a plurality of recorded images, the image disposition recording unit 43 executes an image disposition recording process of disposing a plurality of recorded images in one frame and recording the recorded images in the image recording unit. The "one frame" is, for example, a region in which one set of images is disposed in a case where a plurality of images are acquired on the premise that the plurality of images are displayed as one set. In addition, the "one set of images" may be a state in which a plurality of images are present as independent data and each data item is associated with tag information or the like or may be a state in which a plurality of images are present as one data item.

### Image Disposition Recording Process

As shown in Fig. 5, the "one frame" in the present embodiment is a region in which a set of recorded images 51 and 52 to be displayed is disposed in a case where two images are acquired on the premise that the two images are displayed as one set and imitates the display of one frame in a half-size camera that records a plurality of photographs in one frame of a photographic film. In a case where the half-size mode is selected and the image disposition recording unit 43 executes the image disposition recording process, the card I/F 41 is controlled such that two recorded images 51 and 52 are disposed in one frame 50 and recorded in the memory card 42. In addition, the present invention is not limited thereto, and the image disposition recording unit 43 may temporarily record the images in an internal memory (not shown). A specific example of the image disposition recording process will be described below.

Further, in a case where the imaging element 21 performs imaging in the full-size mode, one image corresponding to the one frame 50 is recorded. That is, in the half-size mode, the first recorded image 51 and the second recorded image 52, each of which has a size that is half of the size in the full-size mode, are disposed in the one frame 50 and recorded in the memory card 42.

Furthermore, in the present embodiment, the second recorded image 52 is a recorded image captured last by the imaging element 21, and the first recorded image 51 is a recorded image captured by the imaging element 21 before the second recorded image 52 is captured. In addition, in the present embodiment, in a case where the one frame 50 has a horizontally long aspect ratio, the first recorded image 51 and the second recorded image 52 recorded in the half-size mode have a vertically long aspect ratio. For example, the horizontally long aspect ratio is set to 16:9, and the vertically long aspect ratio is set to 9:16.

In a case where the preview image is displayed on the display 22 as an image display unit, the disposition position display controller 44 notifies the user of information related to the disposition position of the preview image in one set of images in a case where the preview image is treated as one of a plurality of images (the recorded images 51 and 52 in the present embodiment) that are recorded in the image recording unit and are included in the one set. The "case where the preview image is treated" indicates a hypothetical case where the preview image is treated as one of the plurality of images that are recorded in the image recording unit and are included in the one set and actually notifies of the disposition position of the preview image in the one set of images before the preview image is recorded in the image recording unit. In the present embodiment, in a case where the recorded images that have been acquired by the imaging element 21 in response to a release operation after the display of the preview image, recorded in the image recording unit, and treated as one set are reproduced, the disposition position display controller 44 executes a disposition position display control process of displaying a disposition position indicating the position where the recorded image is disposed in one frame. In addition, in a case of executing the disposition position display control process, the disposition position display controller 44 controls the display driver 38 such that the disposition position is displayed to be superimposed on the preview image. This makes it possible to notify the user of the disposition position. A specific example of the disposition position display control process will be described below.

### Preview Image Display Process and Disposition Position Display Control Process

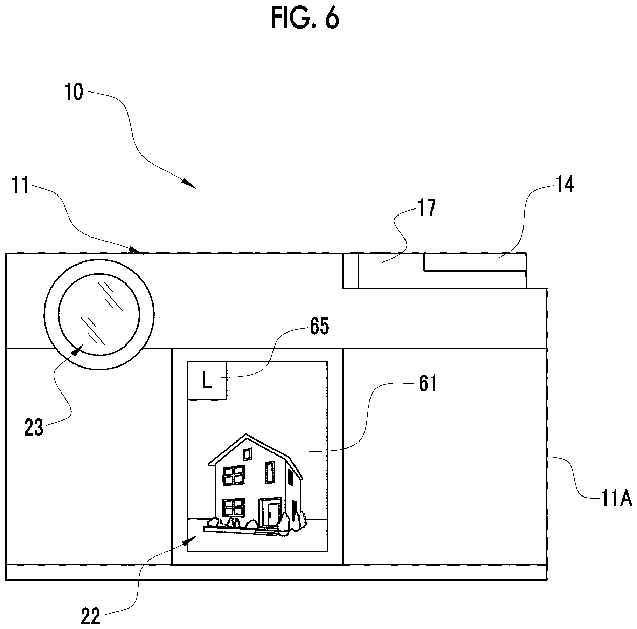

The display 22 displays the image acquired by the imaging element 21. In an example shown in Fig. 6, the display 22 displays a preview image 61. In addition, in the present specification, the "preview image" is an image (excluding temporary recording in the image memory 35) that has been acquired by the imaging element 21, but has not yet been recorded in the image recording unit and may be a still image or a video (including a case of live view display). In addition, it is preferable that the "preview image" has a lower image quality and a lower resolution than a "recorded image" that is obtained by imaging the obj ect with the imaging element 21 and recorded in the image recording unit.

In a case where the release switch 15 is pressed after the preview image is displayed on the display 22 in the half-size mode, the image disposition recording unit 43 disposes the first recorded image 51 and the second recorded image 52 in the one frame 50 and records the recorded images in the memory card 42 as described above. Further, in this case, only the first recorded image 51 may be temporarily recorded in the image memory 35 or the memory card 42 until the second recorded image 52 which is the last image is captured after the first recorded image 51 which is the initial image is captured.

As described above, the disposition position display controller 44 displays the preview image on the display 22 and displays a disposition position 65 indicating the position where the image is disposed in the one frame 50 in a case where the recorded image acquired by the imaging element 21 after the display of the preview image is reproduced. In the present embodiment, a disposition position marked with a letter "R" indicating the right side or a letter "L" indicating the left side in the one frame 50 is displayed as the disposition position 65. In addition, the type of letter used for the disposition position 65 is not limited thereto, and any letter may be used as long as it indicates the position. In the example shown in Fig. 6, the disposition position display controller 44 displays the disposition position 65 marked with "L" indicating the left side on the display 22 to be superimposed on the preview image 61.

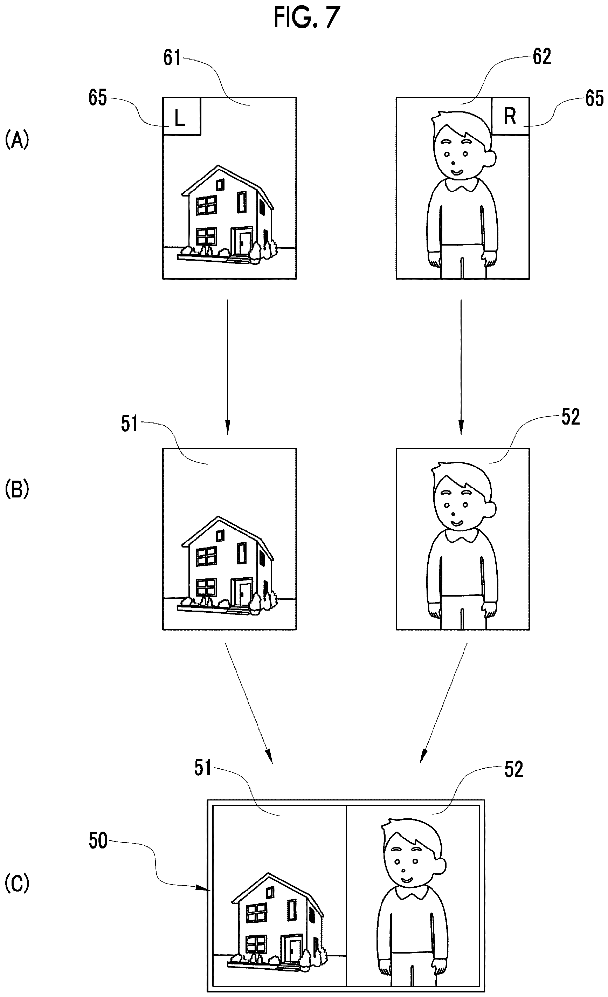

As shown in (A) of Fig. 7, the disposition positions 65 are displayed on the display 22 to be superimposed on the preview images 61 and 62. In addition, the preview image 61 is a preview image before the first recorded image 51 is captured, and the preview image 62 is a preview image before the second recorded image 52 is captured.

As shown in (B) of Fig. 7, in a case where the release operation is performed after the display of the preview image 61, the imaging element 21 acquires the first recorded image 51 of the same object as that in the preview image 61 at the same angle of view as that in the preview image 61. On the other hand, in a case where the release operation is performed after the display of the preview image 62, the second recorded image 52 of the same object as that in the preview image 62 is obtained at the same angle of view as that in the preview image 62. Further, the images recorded in the image recording unit (the recorded images 51 and 52 in the present embodiment) and the preview images may not be completely identical to each other. The reason is that it is optional for the user to view the preview image at any timing and to perform the release operation at any timing and it is rare that the images are completely identical to each other.

As shown in (C) of Fig. 7, the first recorded image 51 captured after the display of the preview image 61, on which the disposition position 65 marked with "L" indicating the left side is displayed to be superimposed, is disposed on the left side of the one frame 50, and the second recorded image 52 captured after the display of the preview image 62, on which the disposition position 65 marked with "R" indicating the right side is displayed to be superimposed, is disposed on the right side of the one frame 50. Then, the first recorded image 51 and the second recorded image 52 are recorded in the memory card 42.

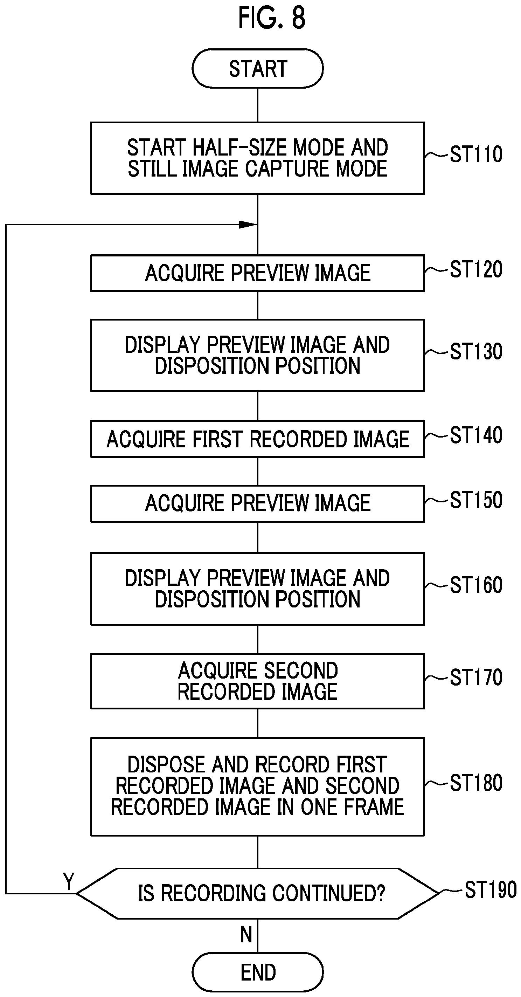

Next, an operation in a case where a still image is captured in the half-size mode using the digital camera 10 according to the embodiment of the present invention will be described with reference to a flowchart shown in Fig. 8. In a case where the user operates the power switch 16 to turn on the digital camera and operates the mode dial 14 to switch the mode to the half-size mode and the still image capture mode (ST110), the controller 31 drives the imaging element 21 to acquire the preview image 61 (ST120).

The controller 31 (disposition position display controller 44) displays the preview image 61 on the display 22 and displays the disposition position 65 marked with "L" which is a position where the first recorded image 51 is disposed in the one frame 50 in a case where the first recorded image 51 acquired by the imaging element 21 is reproduced on the display 22 to be superimposed on the preview image 61 (ST130). In a case where the release switch 15 is pressed after the display of the preview image 61, the imaging element 21 captures the first recorded image 51 of the same object as that in the preview image 61 at the same angle of view as that in the preview image 61 (ST140). After the first recorded image 51 is temporarily recorded in the image memory 35 or the memory card 42, the controller 31 drives the imaging element 21 to acquire the preview image 62 (ST150).

The controller 31 (disposition position display controller 44) displays the preview image 62 on the display 22 and displays the disposition position 65 marked with "R" which is a position where the second recorded image 52 is disposed in the one frame of 50 in a case where the second recorded image 52 acquired by the imaging element 21 is reproduced on the display 22 to be superimposed on the preview image 62 (ST160). In a case where the release switch 15 is pressed after the display of the preview image 62, the imaging element 21 captures the second recorded image 52 of the same object as that in the preview image 62 at the same angle of view as that in the preview image 62 (ST170). The controller 31 (image disposition recording unit 43) disposes the first recorded image 51 on the left side of the one frame 50, disposes the second recorded image 52 on the right side of the one frame 50, and records the recorded images in the memory card 42 (ST180).

Then, in a case where the recording in the half-size mode and the still image capture mode is continued (Y in ST190), the controller 31 starts the acquisition of the preview image 61 by the imaging element 21 (ST120). The display of the preview image 61 and the disposition position 65 (ST130), the capture of the first recorded image 51 (ST140), the acquisition of the preview image 62 (ST150), the display of the preview image 62 and the disposition position 65 (ST160), the capture of the second recorded image 52 (ST170), and the disposition of the first recorded image 51 and the second recorded image 52 in the one frame 50 and the recording of the first recorded image 51 and the second recorded image 52 (ST180) are repeated. In a case where the recording in the half-size mode and the still image capture mode is ended (N in ST190), the process of acquiring the preview image and displaying the disposition position is also ended.

As described above, in the digital camera 10, the preview image is displayed on the display 22, and the disposition position 65 of the preview image in one set of images in a case where the preview image is treated as one of a plurality of images that are recorded in the image recording unit and are included in the one set is displayed. Therefore, the user can easily recognize the positions where the first recorded image 51 and the second recorded image 52 are disposed in the one frame 50 and consider composition on the basis of the positions where the first recorded image 51 and the second recorded image 52 are disposed. In addition, since the display 22 provided on the rear surface of the camera body 11 is used as the image display unit, the user can easily view the preview images 61 and 62. Further, since the disposition positions 65 are displayed to be superimposed on the preview images 61 and 62 displayed on the display 22, it is also possible to view the disposition position 65 while viewing the preview images 61 and 62. Therefore, it is possible to more easily recognize the positions where the first recorded image 51 and the second recorded image 52 captured after the display of the preview images are disposed in one set of images and to consider composition on the basis of the positions where the first recorded image 51 and the second recorded image 52 are disposed.

### First Modification Example

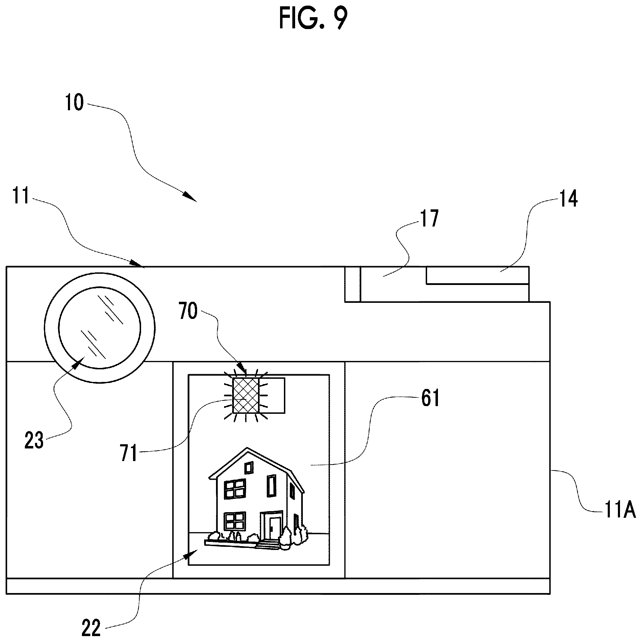

In the first embodiment, the case where the disposition position marked with the letter "R" indicating the right side or the letter "L" indicating the left side of the one frame 50 is displayed as the disposition position displayed by the disposition position display controller 44 is given as an example. However, the present invention is not limited thereto. As shown in Fig. 9, a view indicating the position where the recorded image is disposed in the one frame 50 may be displayed as a disposition position 70.

In an example shown in Fig. 9, the disposition position 70 is a view in which a position 71 (hatched portion) indicating the left side in the one frame 50 is shaded. Therefore, this indicates that the recorded image is disposed on the left side of the one frame 50 in a case where the recorded image acquired by the imaging element 21 after the display of the preview image 61 is treated as one of a plurality of images that are recorded in the image recording unit and are included in one set, for example, in a case where the recorded image is reproduced. In addition, in a case where the recorded image acquired by the imaging element 21 after the display of the preview image is treated as one of the plurality of images that are recorded in the image recording unit and are included in one set and is disposed on the right side of the one frame 50, the disposition position 70 is a view in which a position indicating the right side in the one frame 50 is shaded. In the above configuration, the preview image is displayed, and the disposition position 70 is displayed. Therefore, the user can easily recognize the position where the recorded image acquired by the imaging element 21 after the display of the preview image is disposed in one frame and can consider composition on the basis of the positions where the first recorded image 51 and the second recorded image 52 are disposed. In addition, the display of the disposition position 70 is not limited thereto. The position where the recorded image is disposed in one frame may be blinked, or the brightness of the position may be adjusted to be emphasized (highlighted).

### Second Modification Example

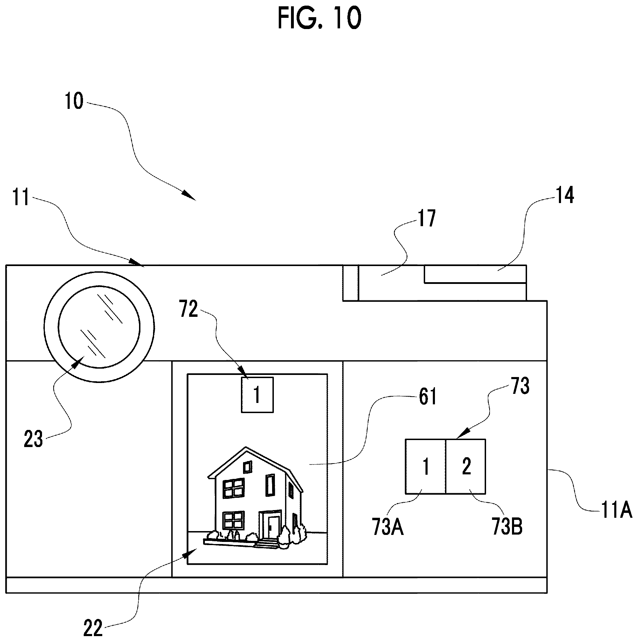

The disposition position displayed by the disposition position display controller 44 is the disposition position 65 of the image in one set of images in a case where the image is treated as one of the plurality of images that are recorded in the image recording unit and are included in the one set. However, the disposition position is not limited to the above-described disposition position. As shown in Fig. 10, information indicating an order in which the recorded image is captured among a plurality of images included in one set may be displayed as a disposition position 72.

In an example shown in Fig. 10, the disposition position 72 is given number "1" indicating the order of the recorded image which is the first captured recorded image among the plurality of images included in the one set. Therefore, this indicates that the recorded image acquired by the imaging element 21 after the display of the preview image 61 is disposed as the first recorded image in the one frame 50 in a case where the recorded image is reproduced. In addition, in a case where the recorded image acquired by the imaging element 21 after the display of the preview image is disposed as the second recorded image in the one frame 50 in a case of being reproduced, the disposition position 72 is given number "2" indicating the order of the recorded image which is the second captured image among the plurality of images included in the one set. In addition, in this modification example, order position information indicating a relationship between the order and position of the image among the plurality of images included in the one set may be given. In the example shown in Fig. 10, order position information 73 is given to the camera body 11 of the digital camera 10. The order position information 73 is provided at a position that is within the field of view of the user who views the display 22.

In the order position information 73, number "1" is given to a position 73A indicating the left side, and number "2" is given to a position 73B indicating the right side in the one frame 50. This enables the user to easily recognize that, in a case where the recorded image acquired by the imaging element 21 after the display of the preview image is treated as one of the plurality of images that are recorded in the image recording unit and are included in one set, the first recorded image is disposed on the left side and the second recorded image is disposed on the right side. Therefore, the display of the preview image and the disposition position 72 enables the user to easily recognize the position where the recorded image captured after the display of the preview image is disposed in one set of images and to consider composition on the basis of the positions where the first recorded image 51 and the second recorded image 52 are disposed.

### Third Modification Example

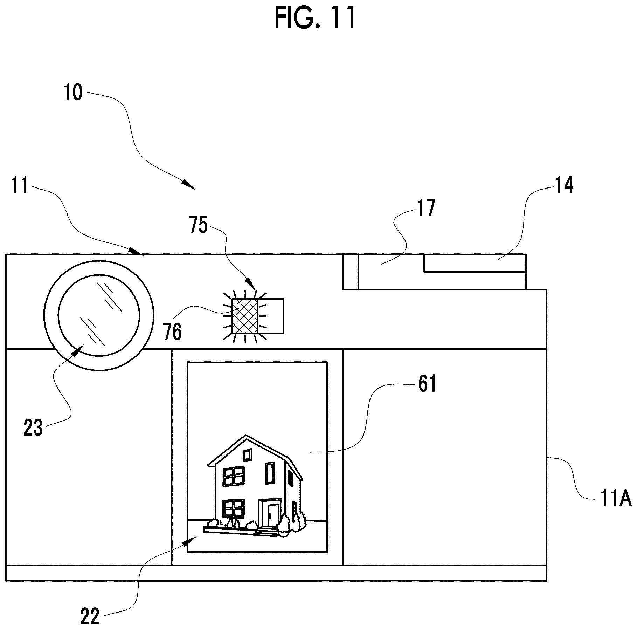

In the first embodiment and each modification example, the disposition position display controller 44 displays the preview image and displays the disposition positions in a case where the preview image is treated as one of the plurality of images that are recorded in the image recording unit and are included in one set on the display 22 to be superimposed on the preview images 61 and 62. However, the present invention is not limited thereto. As shown in Fig. 11, the display of the disposition position 75 may be provided separately from the display 22.

In an example shown in Fig. 11, the disposition position 75 is a display lamp that is provided separately from the display 22, and light is emitted from a position 76 (hatched portion) indicating the left side in the one frame 50. This shows that, in a case where the recorded image acquired by the imaging element 21 after the display of the preview image 61 is treated as one of the plurality of images that are recorded in the image recording unit and are included in one set, the recorded image is disposed on the left side in the one frame 50. In addition, it is preferable that the display lamp displaying the disposition position 75 is disposed at a nearby position that is visible by the user in a case where the user views the display 22. Further, in a case where the recorded image acquired by the imaging element 21 after the display of the preview image is disposed on the right side in the one frame 50 in a case of being treated as one of the plurality of images that are recorded in the image recording unit and are included in one set, light may be emitted from a position indicating the right side in the one frame 50 as the disposition position 75. The above-described configuration makes it possible to obtain the same effects as those in the first embodiment and each modification example.

### Fourth Modification Example

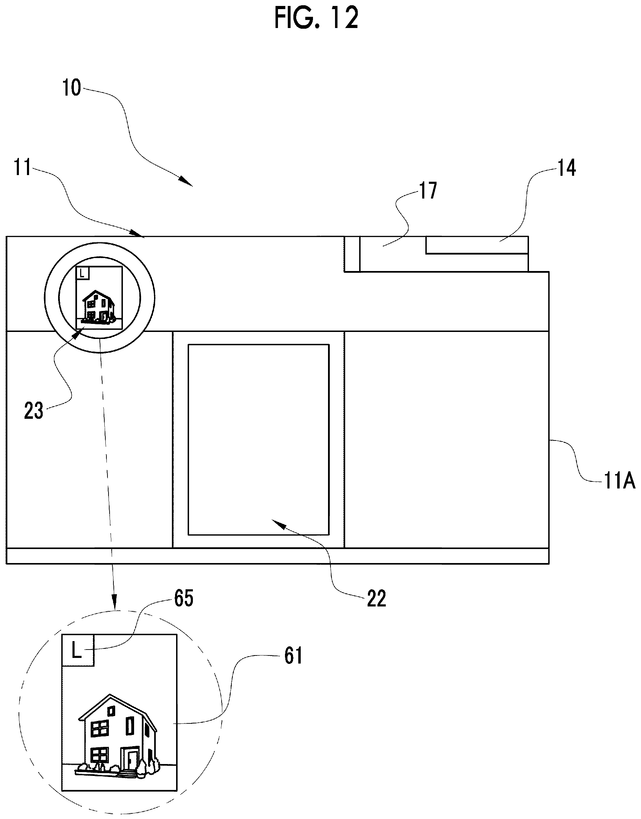

In the first embodiment and each modification example, the display 22 provided on the rear surface of the camera body 11 is used as the image display unit that displays the preview image. However, the present invention is not limited thereto. As shown in Fig. 12, the electronic view finder 23 provided in the camera body 11 may be used. For example, the electronic view finder 23 is positioned above the display 22 and is positioned near the upper end of the camera body 11. In addition, the inside of a circular shape represented by a two-dot chain line in Fig. 12 indicates the display of the preview image and the disposition position that are visible in a case where the user looks in the electronic view finder 23.

In the example shown in Fig. 12, the electronic view finder 23 displays the preview image 61 obtained by imaging the object with the imaging element 21. As in the first embodiment, the disposition position display controller 44 displays the preview image on the electronic view finder 23 and displays the disposition position 65 indicating the position where the recorded image is disposed in the one frame 50 in a case where the recorded image is treated as one of a plurality of images that are recorded in the image recording unit and are included in one set. In the example shown in Fig. 12, the disposition position display controller 44 displays the disposition position 65 marked with "L" indicating the left side on the electronic view finder 23 to be superimposed on the preview image 61. In addition, in a case where the recorded image acquired by the imaging element 21 after the display of the preview image is disposed on the right side in the one frame 50 in a case of being treated as one of the plurality of images that are recorded in the image recording unit and are included in one set, the disposition position 65 marked with "R" indicating the right side may be displayed. Further, the disposition position displayed on the electronic view finder 23 is not limited to this and may be a view showing the position where the recorded image is disposed among the plurality of images included in the one set as in the first modification example or may be information indicating the order in which the recorded image is captured among the plurality of images included in the one set as in the second modification example. Alternatively, as in the third modification example, a display lamp provided separately from the electronic view finder may be used as the display of the disposition position. The above-described configuration makes it possible to obtain the same effects as those in the first embodiment and each modification example.

### Fifth Modification Example

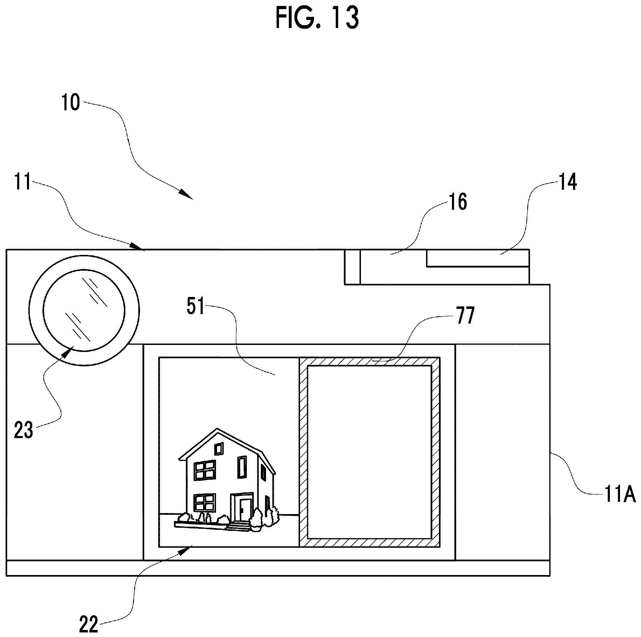

In the first embodiment and each modification example, the preview image is displayed on the image display unit (the display 22 or the electronic view finder 23). However, a captured recorded image captured by the imaging element 21 may not be displayed. The present invention is not limited thereto. The captured recorded image may be displayed on the image display unit. As shown in Fig. 13, the captured recorded image may be displayed on the image display unit, and the disposition position may be displayed on the image display unit.

In the example shown in Fig. 13, the first recorded image 51 and a disposition position 77 are displayed on the display 22 as the image display unit. In this case, the display 22 has a size and an aspect ratio that allow the first recorded image 51 and the second recorded image to be disposed in the one frame 50 recorded in the recording medium, and the first recorded image 51 has already been captured. Then, the captured first recorded image 51 is displayed on the left side of the display 22, and the disposition position 77 (hatched frame portion) is displayed on the right side of the display 22. Therefore, this shows that the first recorded image 51 captured by the imaging element 21 is disposed on the left side in the one frame 50 in a case where the first recorded image 51 is treated as one of the plurality of images that are recorded in the image recording unit and are included in one set and the second recorded image 52 to be captured next by the imaging element 21 is disposed on the right side in the one frame 50 in a case of being reproduced.

In addition, the disposition position 77 is not limited thereto. The right side of the display 22 may be in a blank state (a state in which no image is displayed and the right side is filled with one color), or the preview image may be displayed on the right side of the display 22. Further, before the first recorded image 51 is captured, the disposition position 77 may be displayed on the left side of the display 22, and the first recorded image 51 to be captured next may be disposed on the left side of the one frame 50. The above-described configuration enables the user to obtain the same effects as those in the first embodiment and each modification example.

### Sixth Modification Example

In the first embodiment and each modification example, an example has been described in which the recorded image is acquired by the imaging element 21 and two recorded images are disposed in one frame in a case where the recorded image is treated as one of the plurality of images that are recorded in the image recording unit and are included in one set. However, the present invention is not limited thereto. A deletion function of deleting the recorded image may be provided. In a case where a recorded image has been deleted, the disposition position may be calculated according to the number of recorded images that have not been deleted from the image recording section, that is, the number of remaining recorded images, and the disposition of the recorded images treated as one set may be changed. In the present modification example, the controller 31 has a deletion function of controlling the card I/F 41 such that the recorded image is deleted from the memory card 42.

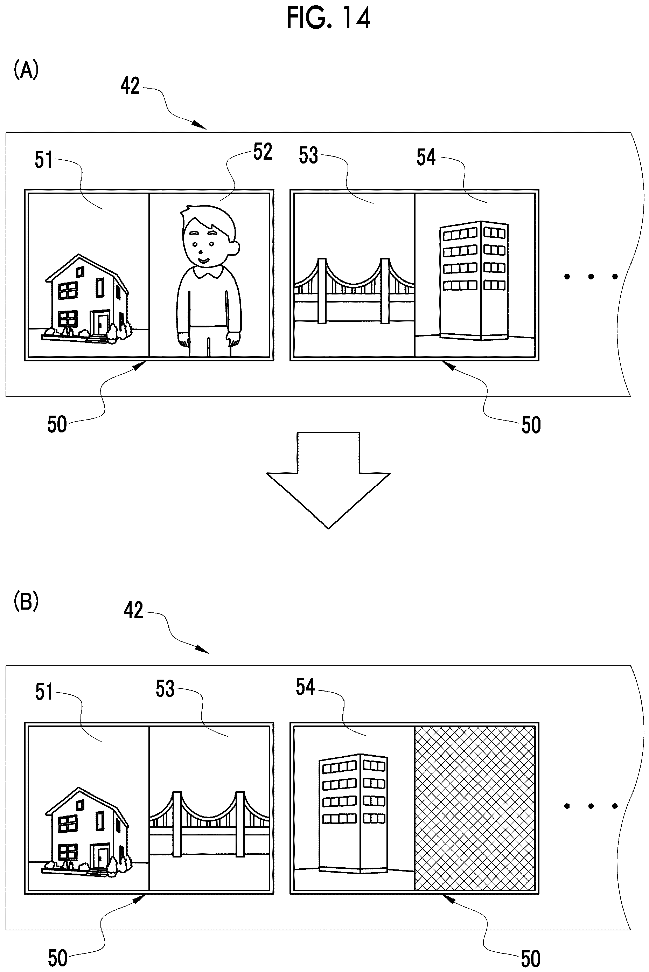

In an example shown in (A) of Fig. 14, the first and second recorded images 51 and 52 disposed in the one frame 50 (treated as one set), and first and second recorded images 53 and 54 that have been captured after the first and second recorded images 51 and 52 and disposed in one frame 50 (treated as one set) are recorded in the memory card 42. In this example, the second recorded image 54 is a recorded image captured last.

In the example shown in (B) of Fig. 14, the second recorded image 52 is deleted by the deletion function of the controller 31. Then, in this case, the controller 31 (image disposition recording unit 43) calculates the disposition position according to the number of recorded images 51, 53, and 54 that have not been deleted from the memory card 42 and have been recorded in the memory card 42 and changes the disposition of the recorded images 51, 53, and 54 which are treated as one set, according to the calculated disposition position. That is, since the second recorded image 52 (which is treated as one set) disposed in the one frame 50 has been deleted, the position of the deleted recorded image is filled with the remaining recorded image such that the first recorded image 51 and the first recorded image 53 are disposed in one frame 50, and the second recorded image 54 is disposed in another frame 50. In the one frame 50 in which the second recorded image 54 is disposed, the recorded image to be captured next may be disposed and recorded, or a blank in which no recorded image is disposed may be disposed.

### Seventh Modification Example

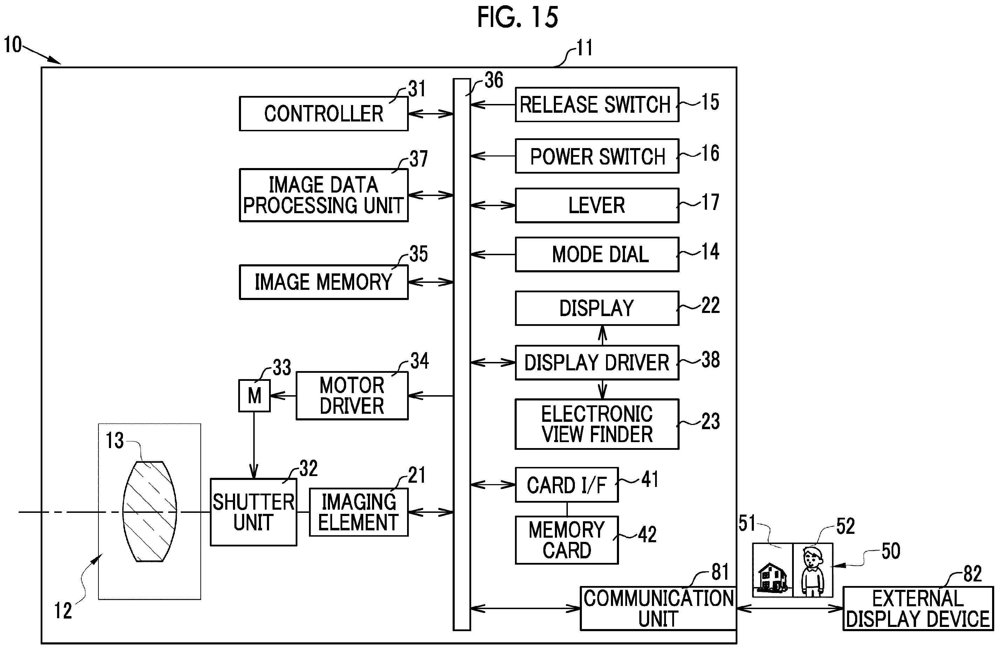

A case where the recorded image is transmitted from the digital camera 10 to an external display device will be described. In this case, as shown in Fig. 15, the digital camera 10 comprises a communication unit 81. The communication unit 81 communicates with an external display device 82 wirelessly or in a wired manner. The external display device 82 is a display device having a display screen and a communication function, such as a display, a smartphone, or a personal computer. In a case where the recorded image is transmitted to the external display device 82, the communication unit 81 transmits all of a plurality of recorded images treated as one set (in the first embodiment, the first recorded image 51 and the second recorded image 52) as one data item. Therefore, the external display device 82 can reproduce and display all of the plurality of recorded images disposed in the one frame 50 (treated as one set).

### Eighth Modification Example

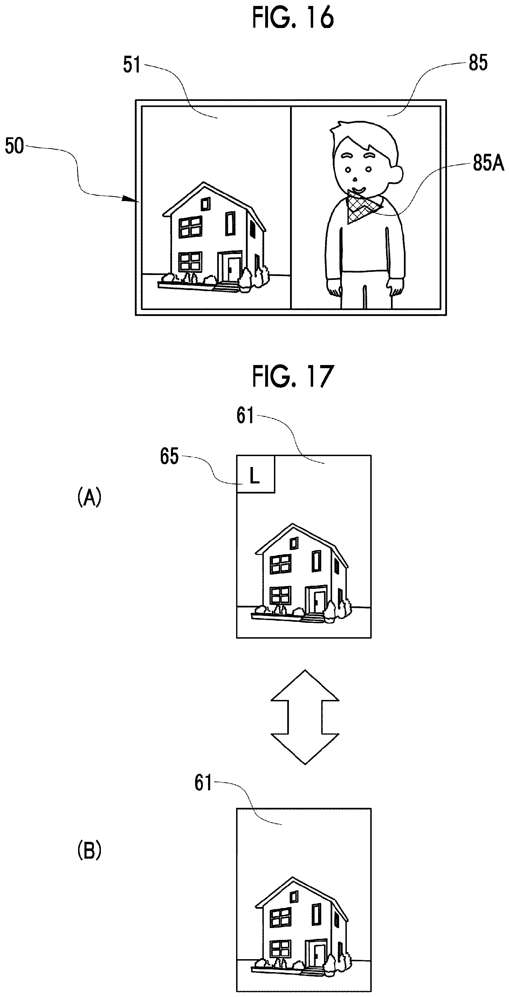

In the first embodiment and each modification example, a case where a still image is captured by the imaging element 21 and recorded in the image recording unit is given as an example. However, the present invention is not limited thereto and can also be applied to a case where a video is captured by the imaging element 21. In this case, as shown in Fig. 16, a second recorded image 85 on the right side of two recorded images disposed in one frame 50 (treated as one set) is a video. In addition, the first recorded image 51 on the left side may be a still image or a video as in the first embodiment and each modification example. As described above, the controller 31 (image disposition recording unit 43) records a video captured by a video capture function as one of a plurality of images included in one set in the image recording unit.

The second recorded image 85 is a video captured by the imaging element 21 in a case where the digital camera 10 is switched to the half-size mode and the video capture mode. In a case where the preview image is displayed, the disposition position is displayed to be superimposed on the preview image. Therefore, it is possible to obtain the same effects as those in the first embodiment and each modification example. Further, in a case where the second recorded image 85 which is a video is reproduced, the video can be reproduced by operating an operation button (not shown) provided in the digital camera 10, by touching a reproduction button 85A displayed on a touch panel (not shown) to be superimposed on the second recorded image 85, or the like.

### Ninth Modification Example

In each of the above-described embodiments, the preview image is displayed on the image display unit, and the disposition position 65, 70, 72, 75, or 77 is always displayed. However, the present invention is not limited thereto. As shown in Fig. 17, the disposition position 65 may be configured to be switched between a display state (see (A) of Fig. 17) and a non-display state (see (B) of Fig. 17). In this case, the controller 31 switches the disposition position 65 between the display state and the non-display state in response to the operation of the operation button (not shown), the touch panel (not shown), or the like provided in the digital camera 10. Further, in this case, the display of the disposition position is not limited to the display in the first embodiment and may be the same as that in any of the modification examples.

### Tenth Modification Example

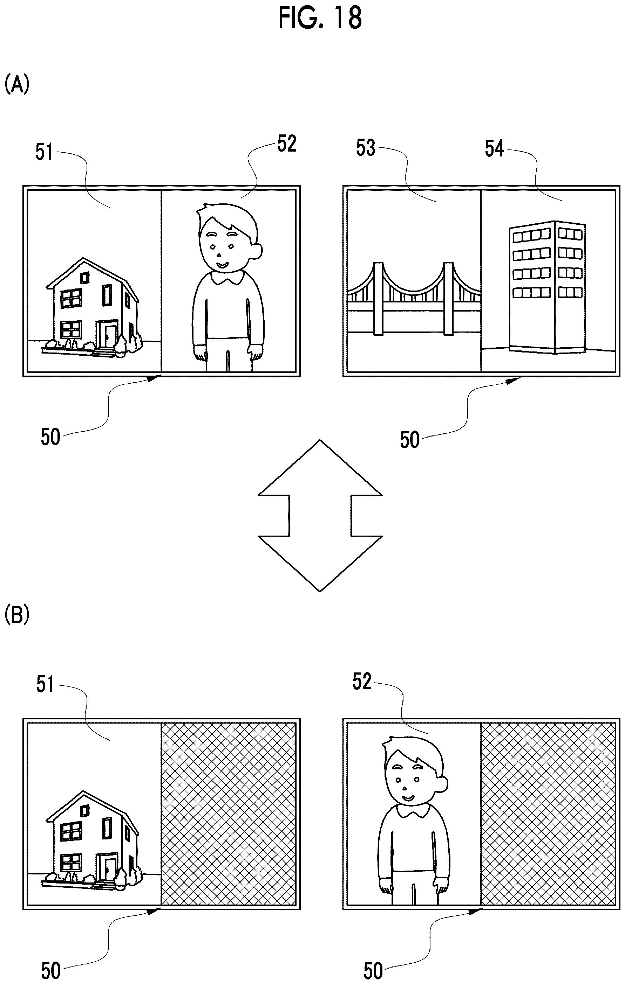

In the first embodiment and each modification example, the number of recorded images that are recorded in the image recording unit and are treated as one set is determined. However, the present invention is not limited thereto, and the number of recorded images disposed in one frame (treated as one set) may be changed in response to the input of an operation of the user. In the present modification example, for example, the number of recorded images may be changed between a case where two recorded images (the first recorded image 51 and the second recorded image) are disposed in the one frame 50 as shown in (A) of Fig. 18 and a case where one recorded image (the first recorded image 51) is disposed in the one frame 50 as shown in (B) of Fig. 18. In this case, the controller 31 (image disposition recording unit 43) changes the number of recorded images disposed in one frame in response to the operation of the operation button (not shown), the touch panel (not shown), or the like provided in the digital camera 10. In addition, in a case where only one recorded image is disposed in the one frame 50, the remaining space may be in a blank state, or a preset template image or the like may be inserted into the remaining space.

### Eleventh Modification Example

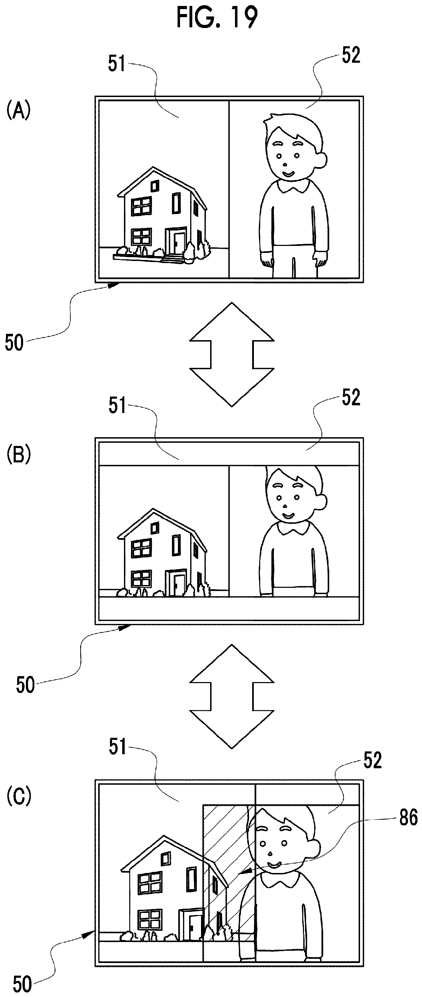

In the first embodiment and each modification example, the size and aspect ratio (length-to-width ratio) of the recorded images disposed in one frame (treated as one set) are determined. However, the present invention is not limited thereto. As shown in Fig. 19, the size and aspect ratio of the recorded images disposed in one frame (treated as one set) in a case where the recorded image is treated as one of a plurality of images that are recorded in the image recording unit and are included in one set may be changed. In this case, the controller 31 (image disposition recording unit 43) changes the size and aspect ratio of the recorded images disposed in one frame in response to the operation of the operation button (not shown), the touch panel (not shown), or the like provided in the digital camera 10. (A) of Fig. 19 shows a state before the change, (B) of Fig. 19 shows a state after the aspect ratio is changed, and (C) of Fig. 19 shows a state after the aspect ratio and the size are changed.

Specifically, in (A) of Fig. 19, as in the first embodiment, two recorded images 51 and 52 are disposed in one frame 50 without gaps, the one frame 50 has, for example, an aspect ratio of 16:9, and the aspect ratio of each of the recorded images 51 and 52 is set to an inverse value, that is, 9:16. On the other hand, in (B) of Fig. 19, for example, the widths of the recorded images 51 and 52 remain the same, and the aspect ratio thereof is 1:1. Therefore, the one frame 50 has gaps above and below the recorded images 51 and 52. In addition, in (C) of Fig. 19, for example, the widths of the recorded images 51 and 52 are increased by 1.2 times, and the aspect ratio thereof is 1:1. Therefore, in order to accommodate the recorded images 51 and 52 in the one frame 50, a portion of the recorded images 51 and 52 is an overlap portion 86 (hatched portion), and gaps are provided below the recorded image 51 and above the recorded image 52.

### Twelfth Modification Example

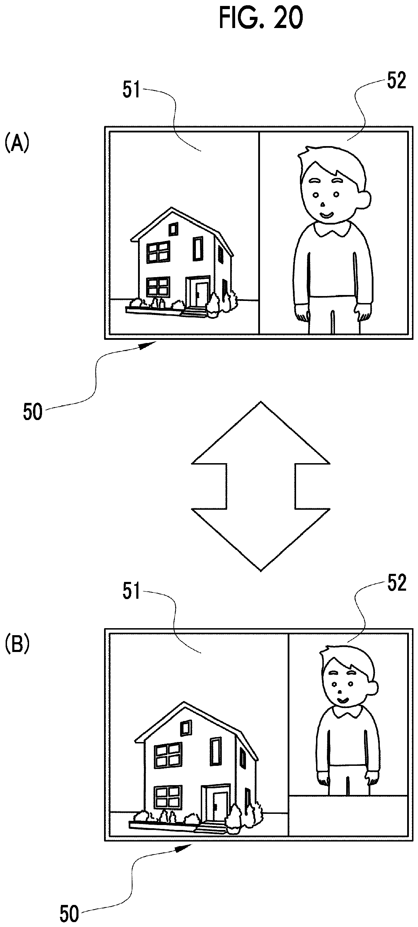

In the first embodiment and each modification example, the ratio of the display regions of a plurality of recorded images treated as one set is determined. However, the present invention is not limited thereto. As shown in Fig. 20, the ratio of the display regions of a plurality of recorded images disposed in the one frame 50 (treated as one set) in a case where the recorded image is treated as one of the plurality of recorded images that are recorded in the image recording unit and are included in one set may be changed. In this case, the controller 31 (image disposition recording unit 43) changes the ratio of the display regions of the plurality of recorded images disposed in one frame in response to the operation of the operation button (not shown), the touch panel (not shown), or the like provided in the digital camera 10. (A) of Fig. 20 shows a state in which the ratio of the display regions of the recorded images 51 and 52 is 50:50, and (B) of Fig. 20 shows a state in which the ratio of the display regions of the recorded images 51 and 52 is 60:40.

In addition, the eleventh modification example and the twelfth modification example can be combined to change a state in which a plurality of recorded images are disposed in the one frame 50 to a state in which only one recorded image is disposed in the one frame 50. In this case, for example, the size and aspect ratio of the recorded images are changed from a state where two recorded images are disposed in the one frame 50 and the ratio of the display regions is 50:50 to a state in which the ratio of the display regions is 100:0. As a result, a state in which one recorded image is disposed in the one frame 50 is obtained.

### Thirteenth Modification Example

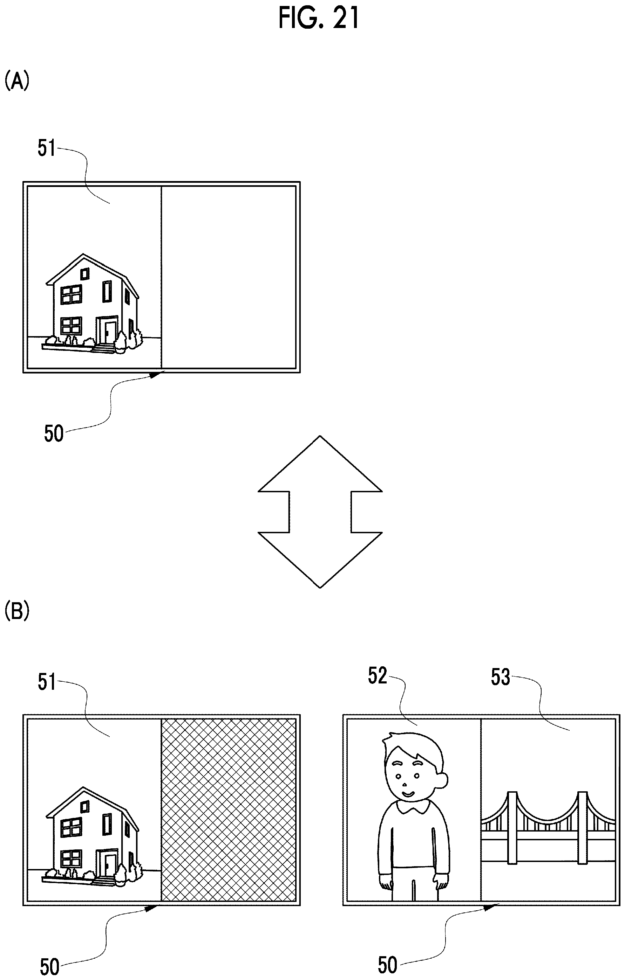

In the first embodiment and each modification example, a predetermined number of recorded images are acquired for a plurality of images treated as one set. However, the present invention is not limited thereto. As shown in (A) of Fig. 21, in a case where the recorded images are captured and at least one recorded image 51 is acquired as one of the images included in one set, a new image is not included in the one set, and a newly acquired image is included in another set. That is, in a case where the recorded image is treated as one of the plurality of images that are recorded in the image recording unit and are included in one set, the recorded image may not be disposed in the remaining position in the one frame 50 and may be newly disposed in another frame 50 as shown in (B) of Fig. 21. That is, the controller 31 (image disposition recording unit 43) skips the disposition of the recorded image. In this case, the controller 31 (image disposition recording unit 43) skips the disposition of the recorded image in response to the operation of the operation button (not shown), the touch panel (not shown), or the like provided in the digital camera 10.

In addition, as shown in (A) of Fig. 21, the remaining space in which the recorded image is not disposed in the one frame 50 may be in a blank state, or a preset template image or the like may be inserted into the remaining space. Further, in (B) of Fig. 21, after the disposition of the recorded image is skipped, the recorded images 52 and 53 are disposed in another frame 50.

### Fourteenth Modification Example

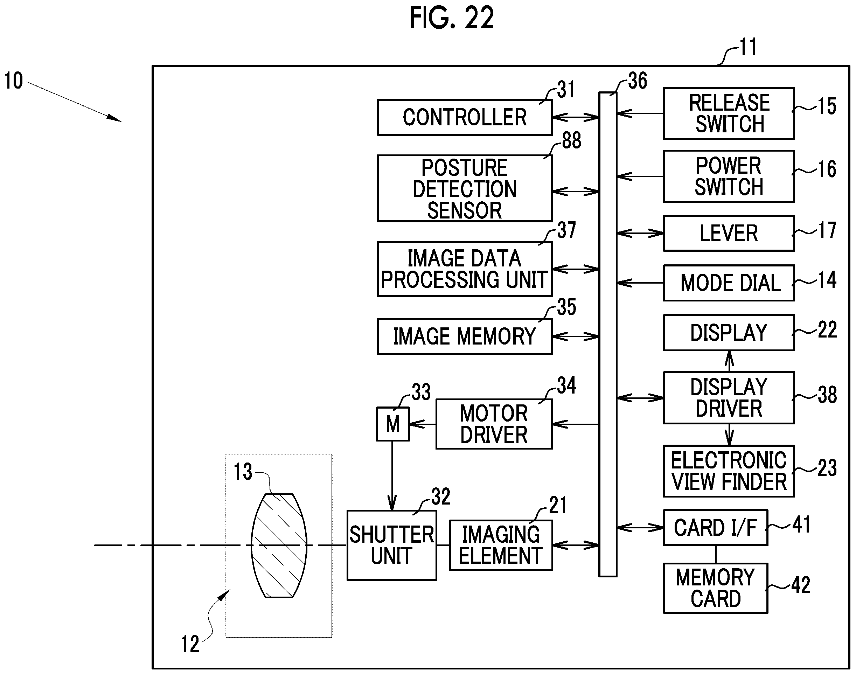

In the first embodiment, the recorded images that are acquired by the imaging element 21 and are treated as one set are disposed in one set of images, regardless of the posture of the camera body 11. However, the present invention is not limited thereto. The posture of the camera body 11 may be detected, and the recorded images may be disposed according to the posture of the camera body 11 and the captured order. In the present modification example, as shown in Fig. 22, the digital camera 10 comprises a posture detection sensor 88. The posture detection sensor 88 detects the posture of the camera body 11 and is, for example, a gyro sensor or the like.

In the present modification example, in the display of a plurality of recorded images disposed in the one frame 50 (treated as one set), the controller 31 (image disposition recording unit 43) displays the recorded images according to the posture of the camera body 11 detected by the posture detection sensor 88 in a case where the plurality of recorded images are captured and attaches information related to the disposition position where the plurality of recorded images are disposed in the one frame 50 according to the order in which the plurality of recorded images have been captured.

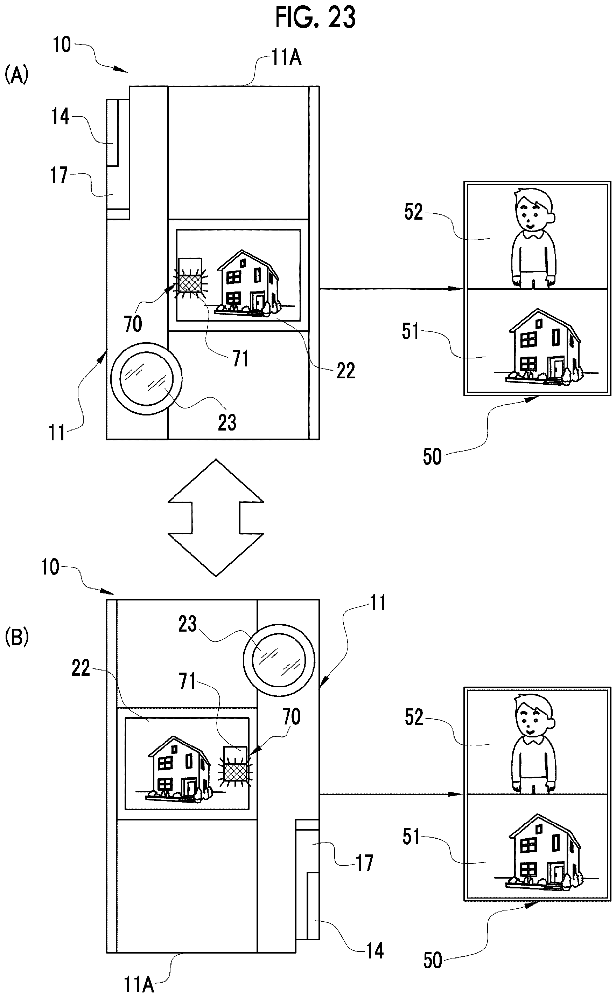

(A) of Fig. 23 illustrates a case where the digital camera 10 is in a vertical shooting state (the longitudinal direction of the camera body 11 is aligned with the vertical direction) and the grip 11A is positioned upward. The posture detection sensor 88 detects that the grip 11A is positioned upward. The controller 31 (image disposition recording unit 43) records the posture of the camera body 11 where the grip 11A is positioned upward and the captured order and attaches information related to the disposition position where the recorded images 51 and 52 are disposed in the one frame 50.

Specifically, in the posture of the camera body 11 where the grip 11A is positioned upward, the one frame 50 has a vertically long aspect ratio, and the recorded images 51 and 52 are disposed with a horizontally long aspect ratio. Then, the recorded image 51 captured first is disposed on the lower side of the one frame 50, and the recorded image 52 captured last is disposed on the upper side of the one frame 50. The information related to the disposition position is recorded as, for example, one of tag information items attached to the recorded image in the recording medium. Further, in (A) of Fig. 23 and (B) of Fig. 23, the position 71 (hatched portion) indicating the lower side in the one frame 50 is displayed at the disposition position 70.

On the other hand, (B) of Fig. 23 shows a case where the camera is in the vertical shooting state and the grip 11A is positioned downward. The posture detection sensor 88 detects that the grip 11A is positioned downward. The controller 31 (image disposition recording unit 43) records the posture of the camera body 11 where the grip 11A is positioned downward and the captured order and attaches information related to the disposition position where the recorded images 51 and 52 are disposed in the one frame 50. Specifically, in the posture of the camera body 11 where the grip 11A is positioned downward, the one frame 50 has a vertically long aspect ratio, and the recorded images 51 and 52 are disposed with a horizontally long aspect ratio. Then, the recorded image 51 captured first is disposed on the lower side of the one frame 50, and the recorded image 52 captured last is disposed on the upper side of the one frame 50. In the above configuration, the recorded images are disposed in the orientation and order in which the recorded images have been captured by the imaging element 21, regardless of the posture of the camera body 11. Therefore, it is possible to obtain the recorded images in the disposition desired by the user without any sense of discomfort.

### Second Embodiment

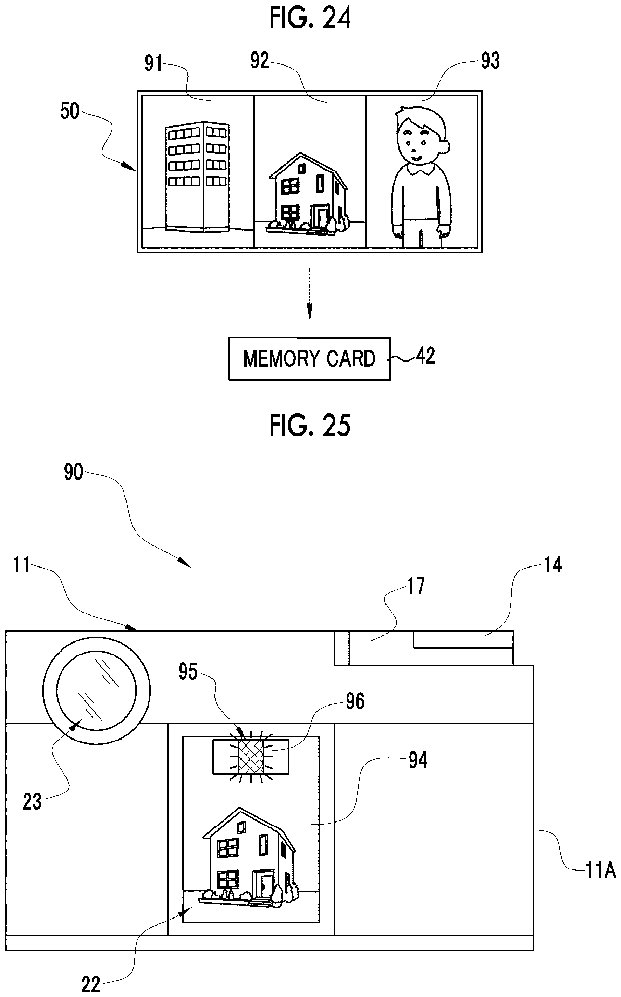

In the first embodiment and each modification example, in a case where the recorded image is treated as one of a plurality of images that are recorded in the image recording unit and are included in one set, two recorded images 51 and 52 are disposed in the one frame 50 and recorded in the recording medium. However, the present invention is not limited thereto. As shown in Fig. 24, in a case where the recorded image is treated as one of the plurality of images that are recorded in the image recording unit and are included in one set, three recorded images 91, 92, and 93 may be disposed in the one frame 50 and recorded in the recording medium. In addition, Fig. 25 shows an example of a digital camera 90 to which the present embodiment is applied. Further, Fig. 24 shows an example in which a plurality of recorded images are recorded in the memory card 42 as the recording medium as in the first embodiment. However, the present invention is not limited thereto, and the plurality of recorded images may be recorded in, for example, an internal memory provided in the digital camera 90. In addition, in the digital camera 90, the same configurations as those in the digital camera 10 according to the first embodiment are denoted by the same reference numerals, and a description thereof will be omitted.

In the present embodiment, the image disposition recording unit 43 executes an image disposition recording process of disposing three recorded images 91, 92, and 93 side by side in one frame 50 in the order in which the three recorded images 91, 92, and 93 have been captured by the imaging element 21 and recording the three recorded images 91, 92, and 93 in the recording medium in a case where the recorded image is treated as one of the plurality of images that are recorded in the image recording unit and are included in one set. Among the three recorded images 91, 92, and 93, the recorded image 91 is a recorded image captured first, the recorded image 92 is a recorded image captured after the recorded image 91, and the recorded image 93 is a recorded image captured after the recorded image 92.

As shown in Fig. 25, in the digital camera 90 according to the present embodiment, a preview image 94 is displayed on the display 22 in the still image capture mode or the video capture mode. Then, in a case where the preview image 94 is displayed on the display 22, the disposition position display controller 44 executes a disposition position display control process of displaying a disposition position 95 indicating the positions where the recorded images 91, 92, and 93 that are captured after the display of the preview image 94 and recorded in the recording medium are disposed in the one frame 50 in a case where the recorded image is treated as one of the plurality of images that are recorded in the image recording unit and are included in one set. In the example shown in Fig. 25, the recorded image captured after the display of the preview image 94 is the recorded image 92 captured second, and a position 96 (hatched portion) indicating the center of the one frame 50 is displayed at the disposition position 95.

As described above, the preview image is displayed, and the disposition position 95 in a case where the preview image is treated as one of the plurality of recorded images 91, 92, and 93 that are recorded in the image recording unit and are included in one set is displayed, which makes it possible for the user to easily recognize the positions where the recorded images 91, 92, and 93 captured after the display of the preview image are disposed in the one frame 50 and to consider composition on the basis of the positions where the recorded images 91, 92, and 93 are disposed. In addition, the display 22 is used as the image display unit that displays the preview image, and the disposition position 95 is displayed to be superimposed on the preview image displayed on the display 22. Therefore, it is possible to obtain the same effects as those in the first embodiment. Further, for the display of the disposition position and the recorded image or the like, the same configurations as those in each of the above-described modification examples can be combined as in the first embodiment.

### Third Embodiment

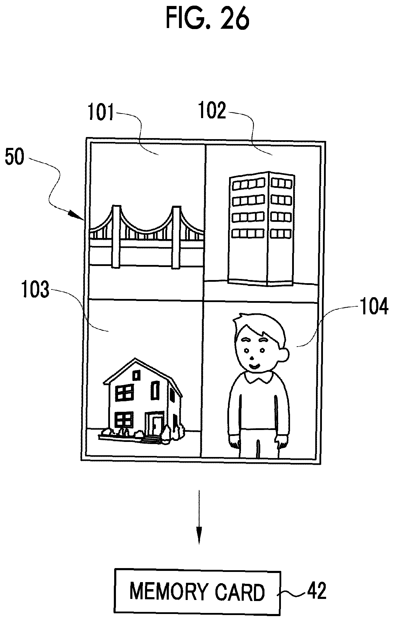

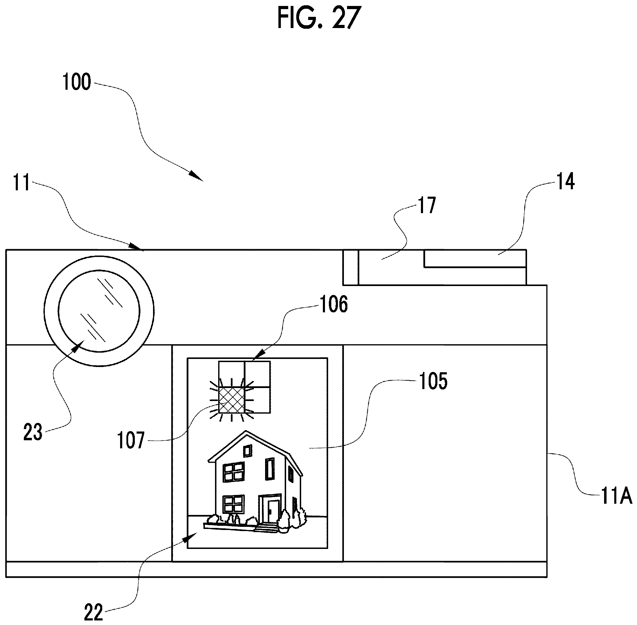

In a case where the recorded image is treated as one of the plurality of images that are recorded in the image recording unit and are included in one set, the number of recorded images disposed in the one frame 50 is not limited to that in the first embodiment, the second embodiment, and each modification example. As shown in Fig. 26, in a case where the recorded image is treated as one of the plurality of images that are recorded in the image recording unit and are included in one set, four recorded images 101 to 104 may be disposed in the one frame 50 and recorded in the recording medium. Further, Fig. 27 shows an example of a digital camera 100 to which the present embodiment is applied. In addition, Fig. 26 shows an example in which a plurality of recorded images are recorded in the memory card 42 as the recording medium as in the first embodiment. However, the present invention is not limited thereto, and the plurality of recorded images may be recorded in, for example, an internal memory provided in the digital camera 100. Furthermore, in the digital camera 100, the same configurations as those in the digital camera 10 according to the first embodiment are denoted by the same reference numerals, and a description thereof will be omitted.

In the present embodiment, the image disposition recording unit 43 executes an image disposition recording process of disposing four recorded images 101 to 104 in a matrix in the one frame 50 in the order in which the four recorded images 101 to 104 have been captured by the imaging element 21 and recording the four recorded images 101 to 104 in the recording medium in a case where the recorded image is treated as one of the plurality of images that are recorded in the image recording unit and are included in one set. Among the four recorded images 101, the recorded image 101 is a recorded image captured first, the recorded image 102 is a recorded image captured after the recorded image 101, the recorded image 103 is a recorded image captured after the recorded image 102, and the recorded image 104 is a recorded image captured after the recorded image 103.

As shown in Fig. 27, in the digital camera 100 according to the present embodiment, a preview image 105 is displayed on the display 22 in the still image capture mode or the video capture mode. Then, in a case where the preview image 105 is displayed on the display 22, the disposition position display controller 44 executes a disposition position display control process of displaying a disposition position 106 indicating a position where the recorded images 101 to 104 that are captured after the display of the preview image 105 and are recorded in the recording medium are disposed in the one frame 50 in a case where the recorded image is treated as one of the plurality of images that are recorded in the image recording unit and are included in one set. In the example shown in Fig. 27, the recorded image captured after the display of the preview image 105 is the recorded image 103 captured third, and a position 107 (hatched portion) indicating the lower right side in the one frame 50 is displayed at the disposition position 106.

As described above, the preview image is displayed, and the disposition position 106 in a case where the preview image is treated as one of the plurality of recorded images 101 to 104 that are recorded in the image recording unit and are included in one set is displayed, which makes it possible for the user to easily recognize the positions of the recorded images 101 to 104 captured after the display of the preview image in the one frame 50 and to consider composition on the basis of the positions where the recorded images 101 to 104 are disposed. In addition, the display 22 is used as the image display unit that displays the preview image, and the disposition position 106 is displayed to be superimposed on the preview image displayed on the display 22. Therefore, it is possible to obtain the same effects as those in the first embodiment and the second embodiment. Further, for the display of the disposition position and the recorded image or the like, the same configurations as those in each of the above-described modification examples can be combined as in the first embodiment and the second embodiment.

In each of the above-described embodiments, a hardware structure of a processing unit that executes various processes, such as the controller 31, is each of the following various processors. The various processors include a central processing unit (CPU) which is a general-purpose processor that executes software (program) to function as various processing units, a graphics processing unit (GPU), a programmable logic device (PLD), such as a field programmable gate array (FPGA), which is a processor whose circuit configuration can be changed after manufacture, and a dedicated electric circuit which is a processor having a dedicated circuit configuration designed to execute various processes.

One processing unit may be configured by one of the various processors or by a combination of two or more processors of the same type or different types (for example, a combination of a plurality of FPGAs or a combination of a CPU and an FPGA). Further, a plurality of processing units may be configured by one processor. A first example of the configuration in which a plurality of processing units are configured by one processor is an aspect in which one processor is configured by a combination of one or more CPUs and software and functions as a plurality of processing units. A representative example of this aspect is a client computer or a server computer. A second example of the configuration is an aspect in which a processor that implements the functions of the entire system including a plurality of processing units using one integrated circuit (IC) chip is used. A representative example of this aspect is a system-on-chip (SoC). As described above, various processing units are configured using one or more of the various processors as a hardware structure.

In addition, specifically, an electric circuit (circuitry) obtained by combining circuit elements, such as semiconductor elements, can be used as the hardware structure of the various processors.

In each of the above-described embodiments, the digital camera in which the imaging optical system 13 is fixed to the camera body 11 is given as an example. However, the present invention is not limited thereto and may be applied to a digital interchangeable lens camera in which the imaging optical system is interchangeable with respect to the camera body. Further, in each of the above-described embodiments, the lens barrel 12 that does not have a zoom lens is given as an example. However, the present invention is not limited thereto, and the imaging optical system 13 may include a zoom lens. In addition, the present invention can be applied to smartphones and cameras, such as video cameras, in addition to the digital camera.

### Explanation of References

10, 90, 100: digital camera
11: camera body
11A: grip
12: lens barrel
13: imaging optical system
14: mode dial
15: release switch
16: power switch
17: lever
18: flash device
19: illumination device
21: imaging element
22: display
23: electronic view finder
31: controller
32: shutter unit
33: shutter motor
34: motor driver
35: image memory
36: bus line
37: image data processing unit
38: display driver
41: card interface (I/F)
42: memory card
43: image disposition recording unit
44: disposition position display controller
50: one frame
51: first recorded image
52: second recorded image
53: first recorded image
54: second recorded image
61: preview image
62: preview image
65, 70, 72, 75, 77, 95, 106: disposition position
71: position
73: order position information
73A, 73B: position
76: position
81: communication unit
82: external display device
85: second recorded image
85A: play button
86: overlap portion
88: posture detection sensor
91, 92, 93: recorded image
94: preview image
96: position
101 to 104: recorded image
105: preview image
106: disposition position
107: position
CL: central axis

## Claims

1. A digital camera (10) comprising:
an imaging element (21) that images an object;
an image recording unit that records an image acquired by the imaging element;
an image display unit (22) that displays a preview image (61, 62) which has been acquired by the imaging element and has not yet been recorded in the image recording unit; and a processor (31),
wherein a plurality of images recorded in the image recording unit are treated as one set, and
the processor is configured to:
display the preview image on the image display unit; and
in a case where the preview image is treated as one of the plurality of images that are recorded in the image recording unit and included in one set, notify a user of information related to a disposition position (65) of the preview image in the one set of the images.

2. The digital camera according to claim 1,
wherein the processor is configured to:
record the plurality of images in a recording medium in a case where the plurality of images included in the one set are acquired.

3. The digital camera according to claim 1, further comprising:
a camera body (11),
wherein the image display unit is a display provided on a rear surface of the camera body.

4. The digital camera according to claim 1, further comprising:
a camera body,
wherein the image display unit is an electronic view finder (23) provided in the camera body.

5. The digital camera according to any one of claims 1 to 4,
wherein the processor is configured to:
display the disposition position on the image display unit.

6. The digital camera according to claim 1,
wherein the processor is configured to:
display, as the disposition position, information indicating an order in which the image is captured among the plurality of images included in the one set.

7. The digital camera according to claim 1,
wherein the processor is configured to:
display the captured image on the image display unit and display the disposition position on the image display unit.

8. The digital camera according to claim 1,
wherein the processor is configured to:
delete the image recorded in the image recording unit;
in a case where the image has been deleted, calculate the disposition position according to the number of images still recorded in the image recording unit and not deleted; and
change a disposition of the images treated as the one set according to the calculated disposition position.

9. The digital camera according to claim 1,
wherein the processor is configured to:
transmit the plurality of images treated as the one set to an external display device (82); and
in a case where the plurality of images is transmitted to the external display device, transmit all of the plurality of images treated as the one set as one data.

10. The digital camera according to claim 1,
wherein the digital camera has a video capture function, and
the processor is configured to record, in the image recording unit, a video captured by the video capture function as one of the plurality of images included in the one set.

11. The digital camera according to claim 1,
wherein the processor is configured to switch the disposition position between a display state and a non-display state.

12. The digital camera according to claim 1,
wherein the processor is configured to change the number of the plurality of images treated as the one set.

13. The digital camera according to claim 1,
wherein the processor is configured to change at least one of a size or an aspect ratio of the images treated as the one set.

14. The digital camera according to claim 1,
wherein the processor is configured to change a ratio of display regions for each of the plurality of images treated as the one set.

15. The digital camera according to claim 1,
wherein the processor is configured to, in a case where the images are captured and at least one of the images is acquired as one of the images included in the one set, include a newly acquired image in another set, not in the existing one set.

16. The digital camera according to claim 1, further comprising:
a camera body; and
a posture detection sensor (88) that detects a posture of the camera body,
wherein, in a case where the plurality of images treated as the one set are displayed, the images are displayed according to the posture of the camera body detected at the time of capturing these images, and
information related to the disposition position of the plurality of images is attached according to an order in which the plurality of images have been captured.

17. The digital camera according to claim 1, further comprising:
a camera body,
wherein, in a case where an upper surface of the camera body faces upward in a vertical direction, a length of the imaging element in the vertical direction is larger than a length of the imaging element in a horizontal direction.
